# DEMANDE DE BREVET EUROPEEN

(11) **EP 2 680 109 A2**
(43) Date de publication de la demande: **01.01.2014**
(21) Numéro de dépôt: 13174213.2
(22) Date de dépôt: 28.06.2013
(51) Int. Cl.: G06F 3/01, G06F 3/0354, G06F 3/041, G06F 3/0488, G06F 3/0346

(54) **Module d'interface tactile à retour haptique**

(30) Priorité: 29.06.2012 FR 1201857
(71) Demandeur: DAV, 94046 Creteil Cedex (FR)
(72) Inventeur: Vanhelle, Stéphane, 94046 Créteil CEDEX (FR)
(74) Mandataire: Pothmann, Karsten

(57) **Abrégé**

L'invention se rapporte à un module d'interface (1) tactile à retour haptique comprenant :
- une surface tactile (3) apte à détecter un appui d'un utilisateur, et au moins
- un actionneur (9) relié à la surface tactile (3), apte à générer un retour haptique par mise en mouvement de la surface tactile (3) en fonction d'un signal de consigne (C),
- un contrôleur (37) configuré pour générer le signal de consigne (C) en fonction d'un motif de retour haptique désiré,

caractérisé en ce qu'il comprend en outre une unité d'accélérométrie (39), configurée pour mesurer les mouvements de la surface tactile (3), et en ce que le contrôleur (37) est configuré pour établir en fonction des mouvements mesurés par l'unité d'accélérométie (39) un écart à la consigne et pour corriger le signal de consigne (C) en fonction de l'écart à la consigne pour rapprocher le mouvement de la surface tactile (3) du motif de retour haptique désiré. L'invention se rapporte aussi au procédé de régulation du retour haptique associé à un tel module d'interface.

## Description

La présente invention concerne un module d'interface tactile pour véhicule automobile, permettant notamment de transmettre un retour haptique à un utilisateur, tel qu'un retour vibratoire.

Dans le domaine automobile, des modules de commande multifonction, réalisés par exemple sous la forme d'un joystick ou d'un bouton rotatif, sont de plus en plus utilisés pour commander des systèmes électriques ou électroniques, tels qu'un système de climatisation, un système audio ou encore un système de navigation.

De tels modules peuvent être associés à un écran d'affichage et permettre une navigation dans des menus déroulants comportant différentes commandes relatives aux systèmes à commander.

Cependant, la présence de fonctions de plus en plus nombreuses et complexes entraîne une multiplication de ces modules. Aussi, pour augmenter le confort ergonomique, l'utilisation d'un module d'interface à surface tactile multifonction, au niveau d'une surface de commande ou bien d'un écran tactile, est considérée comme un développement intéressant.

Lorsqu'un utilisateur exerce une pression sur la surface tactile d'un tel capteur, on peut mesurer la pression appliquée et/ou déterminer la localisation de l'endroit où la pression est exercée. Dans ce cas, un appui de l'utilisateur est par exemple associé à la sélection d'une commande.

En outre, pour signaler à l'utilisateur que sa commande a bien été prise en compte, notamment en conduite de nuit ou lors d'une manipulation en aveugle, il est important que l'utilisateur ait un retour haptique de manière à rester concentré sur la route.

Pour cela, on connaît déjà des modules de commande à retour haptique comportant des actionneurs, tels que par exemple des actionneurs électromagnétiques, piézoélectriques à masse inertielle ou voice coil reliés au module d'interface pour transmettre un mouvement de vibration, de manière que l'utilisateur perçoive un retour haptique l'informant que sa commande a bien été prise en compte.

Cependant, le fait que le véhicule avance sur une route induit des vibrations parasites, qui peuvent dénaturer le retour haptique de sorte que le motif de retour haptique n'est pas discernable par l'utilisateur.

L'invention propose notamment d'améliorer le ressenti du retour haptique et de rendre mieux discernable les motifs de retour haptique.

À cet effet, l'invention a pour objet un module d'interface tactile à retour haptique comprenant :
- une surface tactile apte à détecter un appui d'un utilisateur, et au moins
- un actionneur relié à la surface tactile, apte à générer un retour haptique par mise en mouvement de la surface tactile en fonction d'un signal de consigne,
- un contrôleur configuré pour générer le signal de consigne en fonction d'un motif de retour haptique désiré,
**caractérisé en ce qu'il** comprend en outre une unité d'accélérométrie, configurée pour mesurer les mouvements de la surface tactile, et en ce que le contrôleur est configuré pour établir en fonction des mouvements mesurés par l'unité d'accélérométie un écart à la consigne et pour corriger le signal de consigne en fonction de l'écart à la consigne pour rapprocher le mouvement de la surface tactile du motif de retour haptique désiré.

On réalise ainsi un module d'interface tactile à retour haptique robuste vis-à-vis des perturbations induites par les vibrations extérieures, en particulier du véhicule lorsqu'il roule.

Le module d'interface tactile à retour haptique peut en outre comporter une ou plusieurs caractéristiques, prises séparément ou en combinaison parmi celles qui suivent.

L'unité d'accélérométrie comporte des capteurs piézoélectriques, des jauges de contraintes ou des gyroscopes.

Le contrôleur est configuré pour corriger le signal de consigne par régulation proportionnelle intégrale dérivée (PID).

Le contrôleur comporte :
- un module d'analyse de Fourier configuré pour réaliser une analyse de Fourier des mouvements mesurés de la surface tactile,
- un module de comparaison, configuré pour identifier des modes vibratoires d'amplitude inférieure ou supérieure à la consigne
- un module de correction, configuré pour augmenter et diminuer les modes vibratoires d'amplitude inférieure ou supérieure à la consigne en utilisant notamment la transformée inverse des différences d'amplitudes identifiées.

Le contrôleur est configuré pour détecter un changement de fréquence de résonance du module d'interface et établir une nouvelle fréquence de résonance du module d'interface et pour corriger le signal de consigne par décalage en fréquence pour adapter les motifs de retour haptique à la nouvelle fréquence de résonance du module d'interface établie.

Le module comporte une pluralité d'actionneurs reliés à un contrôleur commun, ledit contrôleur commun étant configuré pour actionner les actionneurs selon des motifs impliquant plusieurs d'entre eux.

L'invention a aussi pour objet le procédé de régulation du retour haptique d'un module d'interface tactile à retour haptique tel que précédemment décrit, **caractérisé en ce qu'il** comporte les étapes suivantes :
- un signal de consigne est envoyé par le contrôleur à l'actionneur afin que l'actionneur mette en mouvement la surface tactile,
- une unité d'accélérométrie mesure la réponse de la surface tactile en mesurant ses mouvements,
- la mesure des mouvements est comparée par un module de comparaison à la réponse attendue au retour haptique désiré pour établir un écart à la consigne,
- l'écart à la consigne est utilisé pour établir un signal de consigne corrigé,
- le signal de consigne corrigé est envoyé à l'actionneur,
- l'actionneur met en mouvement la surface tactile en fonction du signal de consigne corrigé.

Ces étapes peuvent alors être répétées dans une boucle de régulation en utilisant le signal de consigne corrigé d'une itération comme signal de consigne à la première étape de l'itération suivante.

Le procédé peut aussi comporter en outre une étape préalable de mesure du mouvement à vide de la surface tactile et le signal de consigne envoyé à la première étape peut être généré de façon à compenser le mouvement à vide mesuré.

D'autres caractéristiques et avantages de l'invention ressortiront de la description suivante, donnée à titre d'exemple et sans caractère limitatif, en regard des dessins annexés parmi lesquels :
- la figure 1 montre schématiquement une vue en coupe transversale d'un module d'interface selon un mode de réalisation dit "suspendu", où l'actionneur forme un bloc isolé, fixé à la surface tactile à mettre en mouvement,
- la figure 2 montre schématiquement une vue en coupe d'une variante du mode de réalisation suspendu, où un moyen élastique de l'actionneur est en contact direct avec la surface tactile à mettre en mouvement,
- la figures 3 est une vue en perspective d'une autre variante d'un actionneur de module d'interface à retour haptique, selon un mode de réalisation suspendu, en éclaté,
- la figure 4 montre l'actionneur de la figure 3 monté sur la surface tactile à mettre en mouvement,
- la figure 5 montre un schéma simplifié de module présentant un actionneur piloté par un contrôleur,
- la figure 6 montre un module d'interface tactile pourvu d'une multitude d'actionneurs reliés à un contrôleur commun, et
- la figure 7 montre un organigramme simplifié des étapes du procédé de régulation associé au module des figures précédentes.

Sur toutes les figures, les mêmes éléments portent les mêmes numéros de référence.

L'invention concerne un module d'interface tactile à retour haptique 1, par exemple pour un tableau de commande de véhicule automobile, ou encore pour une console centrale de véhicule automobile, permettant de commander des systèmes électriques ou électroniques du véhicule, et pouvant transmettre un retour haptique à un utilisateur ayant par exemple modifié ou sélectionné une commande de manière à assurer à l'utilisateur la prise en compte de la commande modifiée ou sélectionnée.

Le module d'interface comprend une surface tactile 3, par exemple utilisant une technologie capacitive, ou de résistances sensibles à la pression (Force Sensing Resistor, FSR), pour détecter la localisation du doigt d'un utilisateur sur une position de sa surface correspondant à une commande. Il est aussi possible d'utiliser un écran tactile, transparent et superposé à un écran d'affichage, fonctionnant par exemple par détection des ondes de surface. Un système de caméra pourra aussi détecter la ou les zones contactées.

Le module d'interface tactile 1 est en particulier relié à un terminal, dont la surface tactile permet le contrôle, en servant d'interface avec l'utilisateur. Le terminal peut par exemple servir au contrôle d'organes du véhicule, tels qu'une climatisation ou un système de navigation.

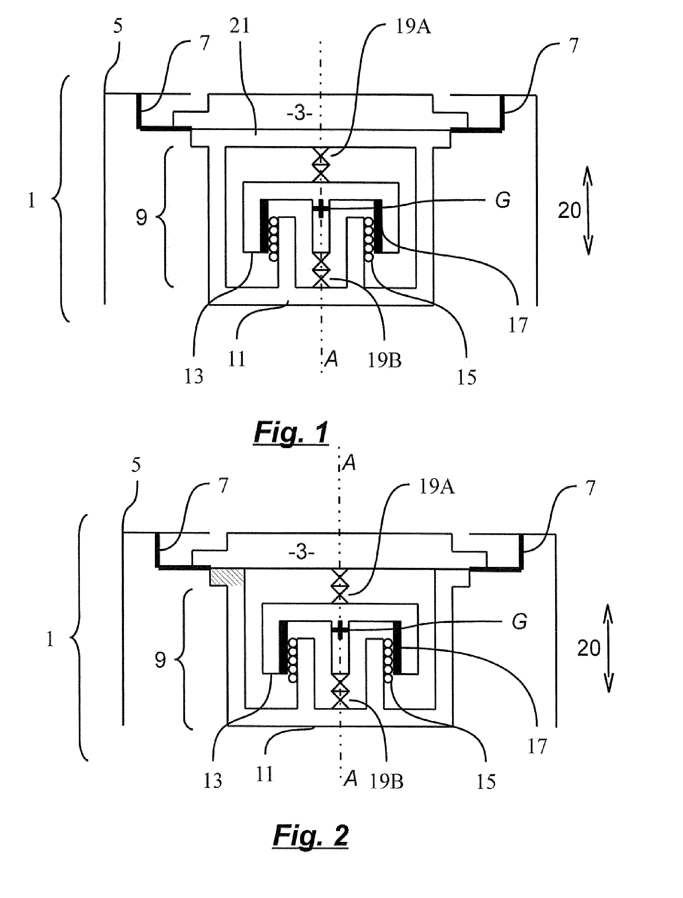

Sur la figure 1, la surface tactile est liée de manière flottante au bâti 5 du module d'interface tactile 1. La liaison entre la surface 3 et le bâti 5 se fait par une liaison 7 de type membrane semi-rigide, ou tout autre moyen de fixation permettant des mouvements limités, notamment en vibration le long de l'axe perpendiculaire à la surface tactile 3.

La surface tactile 3 est reliée à un actionneur 9 qui provoque le retour haptique lorsque l'utilisation du terminal le requiert. Un exemple de tel actionneur 9 est représenté sur les figures 1 à 4. Sur la figure 1 on peut voir que ledit actionneur comporte d'une part un châssis 11, rendu solidaire de la surface tactile 3, et un noyau mobile 13 coopérant avec le châssis 11.

Le noyau mobile 13, logé dans le châssis 11 est mis en mouvement entre des positions extrémales par des moyens d'actionnement électromagnétiques 15, 17. Lors de ce mouvement de va-et-vient, le noyau alterne des phases d'accélération et de décélération, lors desquelles le noyau mobile 13 entraîne la mise en mouvement de la surface tactile 3, et donc le retour haptique.

En outre, de manière non limitative, l'actionneur 9 comporte un premier et un deuxième moyens élastiques 19A et 19B précontraints, de part et d'autre du noyau mobile 13. Le noyau mobile 13 est pris entre ce premier 19A et ce second 19B moyens élastiques précontraints, l'un 19A situé entre la surface tactile 3 et le noyau mobile 13, l'autre 19B entre ledit noyau mobile 13 et le châssis 11.

Ainsi, les moyens élastiques 19A et 19B assistent les moyens d'actionnement électromagnétiques 13, 17 en ce qu'ils stockent une partie de l'énergie cinétique communiquée au noyau mobile lors de ses phases de décélération sous forme d'énergie potentielle élastique, pour ensuite la restituer lors des phases d'accélération.

Les moyens élastiques 19A et 19B précontraints peuvent définir en l'absence d'alimentation de la bobine une position de repos du noyau mobile 13, position dans laquelle les forces exercées par chacun des moyens élastiques 19A et 19B se compensent. La disposition des moyens élastiques 19A et 19B fait que cette position de repos est flottante : le noyau mobile 13 n'est en contact avec aucun autre composant de l'actionneur que lesdits moyens élastiques 19A et 19B.

Les moyens élastiques 19A et 19B peuvent être des ressorts hélicoïdaux ou des lames ressort.

Il est aussi possible d'utiliser un matériau élastique, tel qu'un polymère expansé de type uréthane, un ionomère (polymère réticulé ioniquement), ou du caoutchouc.

Enfin, un des moyens élastiques 19A ou 19B peut être composé d'une combinaison des modes de réalisation précédemment énumérés.

Un exemple de mode de réalisation place les moyens élastiques 19A et 19B de manière alignée sur l'axe A-A, qui est parallèle à la direction du mouvement du noyau mobile 13, matérialisée par la flèche 20, et qui passe par le centre de gravité G dudit noyau mobile 13. Ainsi, ils ne génèrent aucun couple sur le noyau mobile 13. Ceci a pour effet d'éviter la mise en rotation dudit noyau mobile 13, qui peut impliquer qu'il se coince ou bien qu'il heurte d'autres pièces mécaniques.

En particulier, selon une variante non représentée, on peut prévoir que l'un des moyens élastiques 19A ou 19B est composé de plusieurs éléments élastiques, et que ceux-ci sont régulièrement répartis autour de l'axe A-A, afin que la somme des couples qu'ils exercent sur le noyau mobile soit nulle.

Le présent mode de réalisation décrit l'utilisation de moyens élastiques 19A et 19B précontraints en compression, cependant l'utilisation de moyens élastiques 19A et 19B précontraints en extension est également possible.

Pour réaliser les moyens d'actionnement électromagnétiques 15, 17, le châssis 11 porte une bobine 15 pouvant fournir un champ magnétique et le noyau mobile porte au moins un aimant 17, préférentiellement plusieurs, disposés au plus près de la bobine et libres en translation le long de l'axe *A-A.*

Il est également possible de réaliser le montage inverse, la bobine 15 étant alors solidaire du noyau mobile 13 et le ou les aimants 17 étant alors solidaires du châssis 11.

La figure 1 montre un mode de réalisation d'un actionneur dit "suspendu". Par suspendu, on entend que l'actionneur 9 n'est pas relié au bâti 5 du module d'interface tactile 1, et le châssis 11 est solidaire de la surface tactile 3.

Dans le montage suspendu c'est le noyau mobile 13 qui met en mouvement la surface tactile 3 pour générer le retour haptique.

Le châssis 11 présente un couvercle 21 faisant support pour la fixation à la surface tactile 3. Le châssis 11 forme un réceptacle accueillant le reste de l'actionneur 9. Le premier moyen élastique 19A de l'actionneur est relié au couvercle 21 du châssis 11 d'une part et au noyau mobile 13 d'autre part, et le second moyen élastique 19B est relié au châssis 11 d'une part et au noyau mobile 13 d'autre part.

L'actionneur 9 forme alors un bloc fonctionnel bien défini, aisément montable et démontable du module d'interface 1. En effet, ce bloc fonctionnel est simplement vissé ou clipsé à la surface tactile 3, et peut donc être interchangé rapidement, sans que les moyens élastiques 19A et 19B aient à être manipulés.

Il est cependant envisageable de réaliser une variante de ce montage, montrée en figure 2, où le châssis 11, n'ayant pas de couvercle 21, est ouvert sur sa partie supérieure, et où le premier moyen élastique 19A de l'actionneur 9 est relié directement à la surface tactile 3 d'une part et au noyau mobile 13 d'autre part, et le second moyen élastique 19B est relié au châssis 11 d'une part et au noyau mobile 13 d'autre part.

Selon un exemple de réalisation, on prévoit que le châssis 11 et le noyau mobile 13 comportent des moyens de guidage 13, 33 par coopération de forme. À cette fin, le noyau mobile 13 présente une section en E dont la branche centrale est enchâssée dans une portion à section en U correspondante du châssis 11.

Les moyens élastiques 19A et 19B, par leur raideur pouvant être modifiée, permettent de réaliser différentes formes de vibrations de la surface tactile 3. Il est donc possible de générer différents retours haptiques qui peuvent servir à signifier à l'utilisateur autant d'informations variées : la prise en compte de la sélection, ou au contraire son rejet, ou bien la détection d'une saisie erronée.

En particulier, les moyens élastiques 19A et 19B de part et d'autre du noyau mobile 13 peuvent avoir une raideur différente, afin que le mouvement dudit noyau mobile 13 soit fortement asymétrique par rapport à la position de repos.

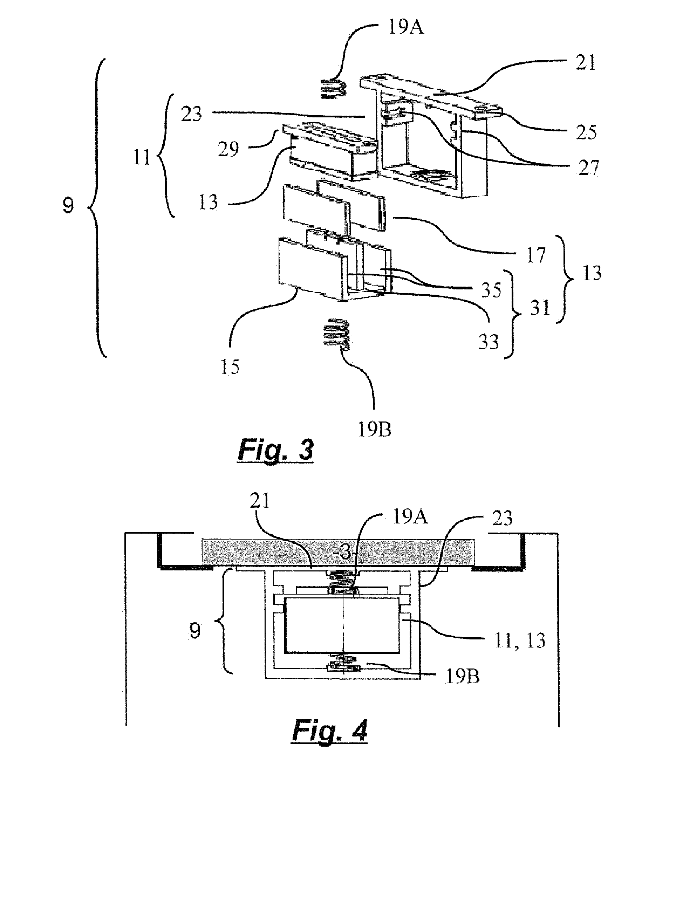

Les figures 3 et 4 représentent une autre variante de réalisation d'un actionneur 9 suspendu.

Le châssis 11 est composé de deux parties : une bobine 15 et un support fixe 23. Le support fixe 23, forme un cadre et entoure la bobine 15. Il accueille aussi les autres pièces de l'actionneur 9. Il présente sur sa partie supérieure formant couvercle 21 deux préperçages 25, dans lesquels sont logées des vis de maintien qui le fixent à la surface tactile 3. En son intérieur, il présente deux sites d'encliquetage 27, destinés à être en prise avec deux languettes 29 complémentaires sur les côtés de la bobine 15, afin de maintenir celle-ci en place, comme vu sur la figure 4.

Le noyau mobile 13 comporte deux aimants 17, qui sont maintenus en vis-à-vis des côtés de la bobine 15, et un support d'aimants 31, auxquels sont fixés les aimants 17 par clipsage ou collage. Le support d'aimants 31 a une section transversale en E, dont la branche centrale 33 est enchâssée dans la bobine 15 en dépassant légèrement à chaque extrémité de la bobine 15. Les deux branches latérales 35 portent les aimants 17.

Les moyens élastiques 19A et 19B sont composés de deux ressorts hélicoïdaux, appuyant sur la branche centrale 33 de la section en E du support d'aimants 31. Les ressorts hélicoïdaux 19A et 19B sont maintenus comprimés par le support 23 du châssis 11, qui accueille les pièces précédemment décrites dans un logement dont la hauteur est inférieure à la somme des longueurs des ressorts hélicoïdaux 19A et 19B à l'état non contraints, additionnée de la hauteur du noyau mobile 13.

Lors de l'assemblage, l'ensemble bobine 15, noyau mobile 13 et ressorts 19A et 19B est d'abord assemblé séparément, puis comprimé pour précontraindre les ressorts 19A et 19B. Enfin il est inséré dans le support fixe 23 par l'une des ouvertures latérales dudit support fixe.

L'actionneur 9 ainsi assemblé est ensuite vissé sur la surface interne ou arrière de la surface tactile 3, comme vu sur la figure 4.

En fonctionnement, la bobine 15 reçoit un signal de consigne en réponse à la détection d'un appui sur la surface tactile 3 ou de l'exécution d'une instruction spécifique par un terminal dont le module d'interface 1 permet l'utilisation. Ce signal de consigne peut comporter, par exemple, soit des courants alternatifs et des train d'impulsions de formes variées et selon des motifs spécifiques pour générer une gamme de retour haptiques, pouvant correspondre à des réponses spécifiques du module 1 à destination de l'utilisateur (oui, non, erreur, etc.).

Lorsque la bobine 15 est alimentée par le courant du signal de consigne, elle exerce une force électromagnétique sur les aimants 17. Ceux-ci sont mis en mouvement, et entraînent avec eux le support d'aimants 31 avec lequel ils forment le noyau mobile 13.

Le noyau mobile 13 s'écarte d'une position de repos dans laquelle les forces qu'exercent sur lui les ressorts 19A et 19B se compensaient. De la sorte, par rapport à la position de repos, l'un des ressorts 19A ou 19B est comprimé, tandis que l'autre est relâché. Les ressorts 19A et 19B exercent ainsi une première force s'opposant au mouvement du noyau mobile 13 et une seconde force, de réaction sur le support fixe 23, qui est transmise à la surface tactile 3 et génère le retour haptique.

De fait, le noyau mobile 13 oscille entre des positions extrémales. Une moindre partie de l'énergie apportée électriquement sert donc à compenser l'énergie cédée à la surface tactile 3 pour la mettre en mouvement, et à compenser les pertes par frottements, que le montage tend à réduire au maximum.

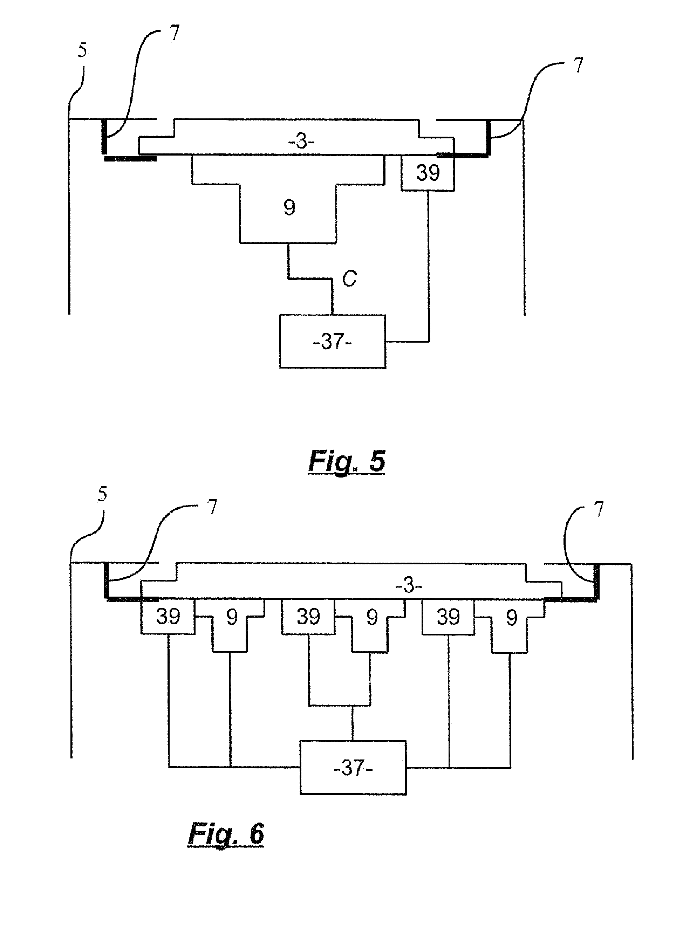

En figure 5 est représenté l'actionneur 9, relié à la surface tactile 3, piloté par un contrôleur 37, relié lui aussi à la surface tactile 3 ainsi qu'à une unité d'accélérométrie 39.

Le contrôleur 37 peut en particulier être un processeur, éventuellement partagé avec d'autres éléments électroniques du véhicule, et en particulier avec le terminal dont le module d'interface tactile 1 permet l'utilisation.

En fonction de l'activité du module d'interface 1 et en particulier en fonction des zones de la surface tactile 3 que l'utilisateur touche, le contrôleur 37 génère un signal de consigne C destiné à mettre en mouvement la surface tactile 3 selon un motif de retour haptique précis.

L'unité d'accélérométrie 39 est configurée pour détecter et mesurer les mouvements de la surface tactile 3. Pour détecter et mesurer lesdits mouvements, l'unité d'accélérométrie 39 peut être placée soit directement sur la surface tactile 3, soit proche de celle-ci et en interaction avec elle. L'unité d'accélérométrie 39 peut par exemple comprendre des détecteurs piézoélectriques, des jauges de contrainte et ou des gyroscopes pour la détection et la mesure de mouvements de la surface tactile 3.

Les valeurs mesurées de mouvements de la surface tactile 3 sont utilisées par le contrôleur 37 pour établir un écart à la consigne desdits mouvements. Cet écart à la consigne correspond à la différence entre le mouvement mesuré et le mouvement correspondant au motif de retour haptique désiré.

Le contrôleur 37 établi alors en fonction de l'écart à la consigne un signal de consigne C corrigé, par exemple en utilisant une régulation de type PID (Proportionnel, Intégrale, Dérivée).

La régulation peut en particulier comprendre une analyse de Fourier, éventuellement rapide (Fast Fourier Transform FFT), réalisée par un module d'analyse de Fourier, l'identification de modes vibratoires d'amplitude inférieure ou supérieure à la consigne par un module de comparaison, et la correction du signal de consigne pour respectivement augmenter et diminuer les modes vibratoires d'amplitude inférieure ou supérieure à la consigne par un module de correction en utilisant la transformée inverse des différences d'amplitudes identifiées. Les modules précédemment mentionnés sont intégrés dans le contrôleur 37 en tant qu'ensemble d'instructions et de fonctions.

Par ailleurs, en référence à la figure 6, on peut prévoir plusieurs actionneurs 9 pour un module d'interface 1, tous reliés à un unique contrôleur commun 37 qui permet de les actionner selon des motifs impliquant un ou plusieurs desdits actionneurs 9, pour générer une gamme de retours haptiques encore plus variée en définissant des modes de vibrations supplémentaires.

Par exemple, deux actionneurs 9 situés à deux extrémités opposées de la surface tactile 3, peuvent voir leurs noyaux mobiles 13 entraînés de sorte à osciller entre leurs positions extrémales en opposition de phase mutuellement. Ceci conduit à un balancement de la surface tactile 3 qui sera perçu différemment d'une vibration de la surface tactile 3 obtenue en faisant osciller en phase les deux noyaux mobiles 13. On peut ainsi coder par exemple une acceptation ou un rejet de la commande sélectionnée par des motifs de vibrations différents.

Dans ce cas de figure, une pluralité d'unités d'accélérométrie 39 peut être utilisée pour détecter, mesurer et ajuster ces modes vibratoires supplémentaires complexes.

Par ailleurs, au cours de leur utilisation, les moyens élastiques 19A, 19B de l'actionneur peuvent changer de constante de raideur, par durcissement ou relâchement, en particulier par fluage progressif ou oxydation. Ce changement de constante de raideur conduit à une modification de la fréquence de résonance de l'actionneur 9. Le contrôleur 37 peut alors être configuré pour détecter ledit changement de la fréquence de résonance et établir une nouvelle fréquence de résonance, par exemple par analyse statistique de l'écart à la consigne sur plusieurs régulations. Le contrôleur 37 est alors configuré pour adapter le signal corrigé non seulement par changement d'amplitude, mais aussi par décalage en fréquence pour adapter les motifs de retour haptique à la nouvelle fréquence de résonance établie.

Cette dernière caractéristique permet non seulement d'ajuster le ressenti du retour haptique, mais aussi d'économiser de l'énergie en tirant parti du phénomène de résonance.

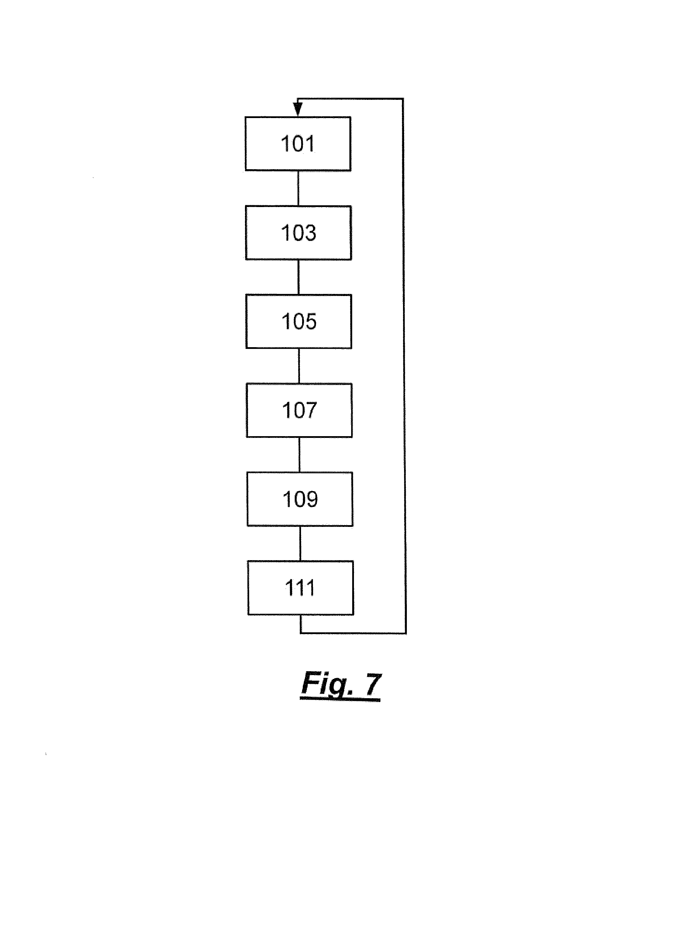

La figure 7 reprend de façon schématique dans un organigramme les étapes du procédé de régulation 100 associé au module 1 précédemment décrit.

La première étape 101 est l'envoi du signal de consigne C initial à l'actionneur 9 par le contrôleur 37. L'actionneur 9 met alors la surface tactile 3 en mouvement à l'étape suivante 103.

Ensuite, à l'étape suivante 105, l'unité d'accélérométrie 39 mesure la réponse de la surface tactile 3, en mesurant ses mouvements. Cette mesure des mouvements est ensuite, à l'étape 107, comparée par le module de comparaison à la réponse attendue qui est le motif de retour haptique désiré pour établir un écart à la consigne.

L'écart à la consigne est ensuite, à l'étape suivante 109 utilisé pour établir un signal de consigne C corrigé, selon l'un des processus mentionnés (PID ou analyse de Fourier). Ce signal C corrigé est ensuite envoyé à l'actionneur 9 pour que celui-ci mette en mouvement la surface tactile 3 en conséquence à l'étape finale 111.

Il est possible de réitérer les étapes 101 à 111 dans une boucle de régulation comme suggéré en figure 7. Le signal de consigne C corrigé d'une itération est alors utilisé comme signal de consigne C initial pour l'itération suivante à sa première étape 101.

Il est possible, en outre, de procéder à une mesure du mouvement de la surface tactile 3 au préalable, à vide, c'est à dire avant même de générer un premier retour haptique, et de compenser le mouvement à vide par le signal de consigne C initial.

L'invention permet un meilleur ressenti du retour haptique en régulant la réponse vibratoire de la surface tactile 3 par mesure directe de ses mouvements au moyen d'une unité d'accélérométrie 39. Dès lors, des motifs de retour haptiques plus proches les uns des autres peuvent être utilisés sans que des vibrations parasites ne les rendent indiscernables.

## Revendications

1. Module d'interface (1) tactile à retour haptique comprenant :
- une surface tactile (3) apte à détecter un appui d'un utilisateur, et au moins
- un actionneur (9) relié à la surface tactile (3), apte à générer un retour haptique par mise en mouvement de la surface tactile (3) en fonction d'un signal de consigne (*C*),
- un contrôleur (37) configuré pour générer le signal de consigne (C) en fonction d'un motif de retour haptique désiré,
**caractérisé en ce qu'il** comprend en outre une unité d'accélérométrie (39),
configurée pour mesurer les mouvements de la surface tactile (3), et **en ce que** le contrôleur (37) est configuré pour établir en fonction des mouvements mesurés par l'unité d'accélérométie (39) un écart à la consigne et pour corriger le signal de consigne (*C*) en fonction de l'écart à la consigne pour rapprocher le mouvement de la surface tactile (3) du motif de retour haptique désiré.

2. Module d'interface selon la revendication 1, **caractérisé en ce que** l'unité d'accélérométrie (39) comporte au moins un capteur piézoélectrique, au moins une jauge de contrainte ou au moins un gyroscope.

3. Module d'interface selon la revendication 1 ou 2, **caractérisé en ce que** le contrôleur (37) est configuré pour corriger le signal de consigne (*C*) par régulation proportionnelle intégrale dérivée (PID).

4. Module d'interface selon la revendication 1 ou 2, **caractérisé en ce que** le contrôleur (37) comporte :
- un module d'analyse de Fourier configuré pour réaliser une analyse de Fourier des mouvements mesurés de la surface tactile,
- un module de comparaison, configuré pour identifier des modes vibratoires d'amplitude inférieure ou supérieure à la consigne
- un module de correction, configuré pour augmenter et diminuer les modes vibratoires d'amplitude inférieure ou supérieure à la consigne en utilisant notamment la transformée inverse des différences d'amplitudes identifiées.

5. Module d'interface tactile selon l'une des revendications précédentes, **caractérisé en ce que** le contrôleur (37) est configuré pour détecter un changement de fréquence de résonance du module d'interface (1) et établir une nouvelle fréquence de résonance du module d'interface (1) et pour corriger le signal de consigne (*C*) par décalage en fréquence pour adapter les motifs de retour haptique à la nouvelle fréquence de résonance du module d'interface (1) établie.

6. Module d'interface tactile selon l'une des revendications précédentes, **caractérisé en ce qu'il** comporte une pluralité d'actionneurs (9) reliés à un contrôleur (37) commun, ledit contrôleur (37) commun étant configuré pour actionner les actionneurs (9) selon des motifs impliquant plusieurs d'entre eux.

7. Procédé de régulation (100) du retour haptique d'un module d'interface tactile à retour haptique, ledit module d'interface (1) comprenant :
- une surface tactile (3) apte à détecter un appui d'un utilisateur,
- au moins un actionneur (9) relié à la surface tactile (3), apte à générer un retour haptique par mise en mouvement de la surface tactile (3) en fonction d'un signal de consigne (*C*),
- un contrôleur (37) configuré pour générer le signal de consigne (C) en fonction d'un motif de retour haptique désiré,
**caractérisé en ce qu'il** comporte les étapes suivantes :
- un signal de consigne (*C*) est envoyé (101) par le contrôleur (37) à l'actionneur (9) afin que l'actionneur (9) mette en mouvement (103) la surface tactile (3),
- une unité d'accélérométrie (39) mesure la réponse de la surface tactile (3) en mesurant ses mouvements,
- la mesure des mouvements est comparée (107) par un module de comparaison à la réponse attendue au retour haptique désiré pour établir un écart à la consigne,
- l'écart à la consigne est utilisé (109) pour établir un signal de consigne (*C*) corrigé,
- le signal de consigne (*C*) corrigé est envoyé à l'actionneur (9),
- l'actionneur (9) met en mouvement (111) la surface tactile (3) en fonction du signal de consigne (*C*) corrigé.

8. Procédé selon la revendication 7, **caractérisé en ce que** les étapes sont répétées dans une boucle de régulation en utilisant le signal de consigne (*C*) corrigé d'une itération comme signal de consigne (*C*) à la première étape de l'itération suivante.

9. Procédé selon la revendication 7 ou 8, **caractérisé en ce qu'il** comporte en outre une étape préalable de mesure du mouvement à vide de la surface tactile (3) et **en ce que** le signal de consigne (*C*) envoyé à la première étape est généré de façon à compenser le mouvement à vide mesuré.
